# EUROPÄISCHE PATENTSCHRIFT

(11) **EP 3 125 696 B1**
(45) Veröffentlichungstag und Bekanntmachung des Hinweises auf die Patenterteilung: **19.04.2023**
(21) Anmeldenummer: 15712292.0
(22) Anmeldetag: 16.03.2015
(51) Int. Cl.: A22C 25/17, A22C 25/08

(54) **VORRICHTUNG UND VERFAHREN ZUM ABTRENNEN EINER DIE HAUT EINSCHLIESSENDEN OBERFLÄCHENSCHICHT VON FISCHFILETS**
DEVICE AND METHOD FOR REMOVING A SURFACE LAYER INCLUDING THE SKIN FROM FISH FILLETS
DISPOSITIF ET PROCÉDÉ POUR SÉPARER UNE COUCHE SUPERFICIELLE DE FILETS DE POISSON INCLUANT LA PEAU

(30) Priorität: 03.04.2014 DE 102014104771
(43) Veröffentlichungstag der Anmeldung: 08.02.2017
(73) Patentinhaber: Nordischer Maschinenbau Rud. Baader GmbH + Co. KG, 23560 Lübeck (DE)
(72) Erfinder: SCHWARZ, Olaf, 23966 Wismar (DE)
(74) Vertreter: Stork Bamberger Patentanwälte PartmbB
(86) Internationale Anmeldenummer: PCT/EP2015/055422
(87) Internationale Veröffentlichungsnummer: WO 2015/150061

(56) Entgegenhaltungen:
- EP-A1- 0 324 522
- WO-A1-2009/021672
- DE-A1-102012 107 278
- DE-C1- 4 329 380
- US-A- 5 236 323
- US-A1- 2012 192 695

## Beschreibung

Die Erfindung betrifft eine Vorrichtung zum Abtrennen einer die Haut einschließenden Oberflächenschicht von Fischfilets, umfassend eine Zuführeinrichtung zum Zuführen der auf ihrer Haut liegenden Fischfilets Schwanzende voraus in Transportrichtung T in den Bereich einer Trennanordnung, eine Abtransporteinrichtung zum Abtransport der von der Oberflächenschicht befreiten Fischfilets, sowie die Trennanordnung, wobei die Trennanordnung eine in Transportrichtung T der Fischfilets hinter der Zuführeinrichtung und vor der Abtransporteinrichtung angeordnete und umlaufend angetriebene Mitnehmerwalze mit einer der Transportrichtung T gleichlaufenden Antriebsrichtung A, eine im Bereich der Mitnehmerwalze angeordnete Hauptschneide zum Abtrennen der Oberflächenschicht sowie ein im Bereich der Hauptschneide wirksames Andrückelement zum Andrücken der Fischfilets an die strukturierte Förderfläche der Mitnehmerwalze umfasst, wobei die Hauptschneide zur Bildung eines Schneidspaltes S beabstandet zur Mitnehmerwalze angeordnet und gegenüber der Mitnehmerwalze ausweichbar ausgebildet ist.

Des Weiteren betrifft die Erfindung ein Verfahren zum Abtrennen einer die Haut einschließenden Oberflächenschicht von Fischfilets, umfassend die Schritte: Zuführen der auf ihrer Haut liegenden Fischfilets Schwanzende voraus in Transportrichtung T mittels einer Zuführeinrichtung in den Bereich einer Trennanordnung, Trennen der Oberflächenschicht der Fischfilets von demselben mittels der Trennanordnung, indem die Fischfilets zwischen einer rotierend angetriebenen Mitnehmerwalze und einem Andrückelement liegend einer Hauptschneide zugeführt werden, wobei die abgetrennte Oberflächenschicht über einen zwischen der Hauptschneide und der Mitnehmerwalze gebildeten Schneidspalt S nach unten abgeführt wird, während das von der Oberflächenschicht befreite Fischfilet an eine Abtransporteinrichtung übergeben wird, und Abtransportieren der von der Oberflächenschicht befreiten Fischfilets mittels der Abtransporteinrichtung.

Solche Vorrichtungen und Verfahren kommen in der Fisch verarbeitenden Industrie zum Einsatz, um Fischfilets von einer die Haut einschließenden Oberflächenschicht zu befreien. Anders ausgedrückt dienen die genannte Vorrichtung und das Verfahren dazu, von den Fischfilets, die mit ihrer Hautseite auf der Zuführeinrichtung liegen und die Schwanzende voraus transportiert werden, die Hautschicht (mit oder ohne Silberspiegel) vom Fischfilet zu trennen. Dazu sind die Zuführeinrichtung und die Abtransporteinrichtung in der Förder-(Transport)ebene beabstandet zueinander angeordnet. Zwischen der Zuführeinrichtung und der Abtransporteinrichtung ist die zylindrische Mitnehmerwalze, die auch als Enthäutewalze bezeichnet wird, derart angeordnet, dass der Scheitelpunkt der Mitnehmerwalze etwa in der durch die Zuführeinrichtung und die Abtransporteinrichtung definierten Förder-(Transport)ebene liegt. Beim Eintreffen der Fischfilets in den Bereich der Mitnehmerwalze zieht diese durch ihren umlaufenden Antrieb die Fischfilets von der Zuführeinrichtung, während die Zuführeinrichtung durch ihren Antrieb das Fischfilet "nachschiebt". Auf der Mitnehmerwalze wird das Fischfilet zwischen der Mitnehmerwalze und dem üblicherweise oberhalb der Mitnehmerwalze angeordneten Andrückelement eingeklemmt bzw. auf die strukturierte Förderfläche der Mitnehmerwalze gedrückt und dabei weiter in Richtung der Trennanordnung transportiert. Das Fischfilet trifft mit seiner schwanzseitigen Stirnseite auf die Hauptschneide, die in einem Abstand - zur Bildung des Schneidspaltes S - von der Mitnehmerwalze angeordnet ist. Dadurch taucht die Hauptschneide zwischen die Haut und das Filet des Fischfilets in dasselbe ein. Die nach unten weisende Hautschicht wird durch die Mitnehmerwalze in dem Schneidspalt S nach unten abgeführt, während das von der Haut befreite Fischfilet über die Hauptschneide hinweg auf die Abtransporteinrichtung transportiert wird.

Die Auswahl der Mitnehmerwalze insbesondere hinsichtlich der Anzahl der Zähne sowie die Einstellung der Größe des Schneidspaltes S sind stark von der Größe der zu bearbeitenden Fischfilets abhängig. Es werden daher unterschiedliche Fischfiletgrößen mit unterschiedlichen Kombinationen aus Hauptschneide und Mitnehmerwalze eingesetzt. Bei den bekannten Vorrichtungen wird für große (und damit auch dicke) Fischfilets ein großer Schneidspalt S benötigt, während für kleine (und damit auch dünne) Fischfilets ein kleiner Schneidspalt S benötigt wird. Dazwischen gibt es noch andere mittlere Schneidspaltgrößen. Diese Größe des Schneidspaltes S muss vor der Bearbeitung der Fischfilets auf die entsprechend zu bearbeitende Fischfiletgröße eingestellt werden. Das erfordert einen erhöhten Einstellaufwand und ist auch von der Erfahrung der Bedienperson abhängig. Weiterhin wird für das Enthäuten großer/dicker Fischfilets eine Mitnehmerwalze mit einer geringen Zähnezahl verwendet, um insbesondere das Einführen des Schwanzendes in den Schneidspalt S zu erleichtern, während für das Enthäuten kleiner/dünner Fischfilets eine Mitnehmerwalze mit einer hohen Zähnezahl eingesetzt wird. Das erfordert zusätzlichen Umrüstaufwand, der zu Stillstandzeiten und damit Produktionsausfall führt. Des Weiteren können mit der genannten Vorrichtung und einer ausgewählten Kombination aus Hauptschneide und Mitnehmerwalze auch nur für einen bestimmten Größenbereich der Fischfilets optimale Schnittergebnisse erzielt werden, was ein Vorsortieren der Fischfilets notwendig macht.

Dokument US 2012/192695 A1 beschreibt eine Vorrichtung und ein Verfahren zum Abtragen einer Oberflächenschicht von Lebensmittelprodukten. Dokument DE 4329380 C1 beschreibt ein Verfahren zum Bearbeiten von Fischfilets, betreffend das Abtrennen einer die Haut einschliessenden Oberflächenschicht sowie eine dafür geeignete Vorrichtung.

Der Erfindung liegt somit die Aufgabe zugrunde, eine einfache und leicht handhabbare Vorrichtung zum Enthäuten von Fischfilets unterschiedlicher Größe zu schaffen. Die Aufgabe besteht weiterhin darin, ein entsprechendes Verfahren vorzuschlagen.

Diese Aufgabe wird durch eine Vorrichtung gemäß Anspruch 1 gelöst.

Mit dieser erfindungsgemäßen Ausgestaltung wird auf einfache und zuverlässige Weise das individuelle Einstellen der jeweils für einen optimalen Trennvorgang benötigen Schneidspaltgröße automatisch und während des laufenden Produktionsbetriebs ermöglicht. Durch die individuelle Anpassung der Schneidspaltgröße in Abhängigkeit der jeweiligen Fischfiletgröße kann eine von der Fischfiletgröße unabhängige Mitnehmerwalze eingesetzt werden, so dass auf das aufwendige Austauschen der Mitnehmerwalze verzichtet werden kann.

Eine besonders zweckmäßige Weiterbildung der Erfindung zeichnet sich dadurch aus, dass die Hauptschneide an einem Schwenkmechanismus angeordnet ist, der um einen Schwenkpunkt D zur Veränderung der Größe des Schneidspaltes S schwenkbar ausgebildet ist, wobei dem Schwenkmechanismus ein Stellantrieb zum Ausführen der Schwenkbewegung, zwei Anschläge zur Begrenzung der Schwenkbewegung in beide Schwenkrichtungen sowie ein Rückhalteelement, dessen Rückhaltekraft entgegen der Betätigungsrichtung des Stellantriebs wirkt, zugeordnet sind, und dass der Stellantrieb über eine Signalleitung mit der Auswerte- und Steuereinheit verbunden ist. Diese Weiterbildung unterstützt das präzise und schnelle Anpassen der Trennanordnung an die jeweils zu verarbeitende Fischfiletgröße. Das Rückhalteelement ist grundsätzlich bestrebt, den Schwenkmechanismus auf die Mitnehmerwalze zu zu bewegen, also zur Bildung eines kleinen Schneidspaltes S. Mit dem Stellantrieb kann gegen die Rückhaltekraft eine Schneidspaltvergrößerung bewirkt werden. Beide Bewegungen werden jeweils durch einen Anschlag derart begrenzt, dass der Schwenkmechanismus mit der Hauptschneide zum einen nicht gegen die Mitnehmerwalze und zum anderen nicht gegen die Abtransporteinrichtung bewegt werden kann. Durch die Anbindung des Stellantriebs an die Auswerte- und Steuereinheit kann der Schwenkmechanismus und damit die Hauptschneide in Abhängigkeit der zuvor ermittelten Fischfiletgröße quasi on-line auf den gewünschten Abstand zur Mitnehmerwalze mit einer optimalen Schneidspaltgröße eingestellt werden.

Gemäß der Erfindung ist die Hauptschneide fest mit dem Schwenkmechanismus verbunden und mit diesem um den Schwenkpunkt D schwenkbar, und der Hauptschneide ist eine relativ zur Hauptschneide bewegbare Nebenschneide zum Anschneiden der Oberflächenschicht zugeordnet, wobei der Nebenschneide ein Stellantrieb, der über eine Signalleitung mit der Auswerte- und Steuereinheit verbunden ist, zum Ausführen der Anschnittbewegung in Abhängigkeit der zuvor ermittelten Fischfiletgröße zugeordnet ist. Diese Nebenschneide ist entgegen der Transportrichtung T über die Hauptschneide hinaus heraus bewegbar, so dass das Fischfilet mit dem schwanzseitigen Ende zunächst und zuerst auf die Nebenschneide trifft, die das Anschneiden des Fischfilets unterstützt und optimiert. Durch die Anbindung des Stellantriebs für die Nebenschneide an die Auswerte- und Steuereinheit kann die Nebenschneide bei großen Fischfilets länger in der Anschneide-(Arbeits)position, also über die Hauptschneide hinausragend, im Fischfilet verbleiben, um einen längeren bzw. tieferen Anschnitt zu erreichen, während die Nebenschneide bei kleinen Fischfilets eher, also unmittelbar nach dem Anschnitt, zurückgezogen werden kann. Dadurch wird eine individuell optimierte Schnittführung erreicht, die zu messbaren Qualitätsverbesserungen beim Enthäuten führt.

Eine besonders bevorzugte Ausführungsform der Erfindung ist dadurch gekennzeichnet, dass der Zuführeinrichtung ein Antriebsmittel zugeordnet ist, das über eine Signalleitung mit der Auswerte- und Steuereinheit zur Übermittlung der Transportgeschwindigkeit der Fischfilets in Transportrichtung T in Verbindung steht. Dadurch kann die exakte Einstellung der Hauptschneide und/oder der Nebenschneide weiter optimiert werden, da in Kenntnis der Fischfiletgröße und der Transportgeschwindigkeit, mit der das Fischfilet auf die Trennanordnung zu transportiert wird, der genaue "Ankunftszeitpunkt" des jeweiligen Fischfilets an dem Schneidspalt S bekannt ist und für das Steuern der Hauptschneide und/oder der Nebenschneide verwendet werden kann.

Eine vorteilhafte Weiterbildung der Erfindung zeichnet sich dadurch aus, dass dem Andrückelement ein Stellantrieb, der über eine Signalleitung mit der Auswerte- und Steuereinheit verbunden ist, zur Einstellung des Abstandes zur Mitnehmerwalze in Abhängigkeit der zuvor ermittelten Fischfiletgröße zugeordnet ist. Dadurch kann der optimale Druck auf das Fischfilet ausgeübt werden, der gerade so groß ist, dass einerseits ein Enthäuten gerade noch möglich ist und andererseits das Fischfilet nur minimal belastet wird.

Zweckmäßigerweise sind die Stellantriebe unabhängig voneinander mittels der Auswerte- und Steuereinheit betätigbar und/oder steuerbar. Dadurch ist eine besonders individuelle Schnittführung mit einem optimierten Trennvorgang realisierbar, da für jedes einzelne Fischfilet individuell und automatisch überlagerbare Anschnitt-und Trennbewegungen der Hauptschneide und/oder der Nebenschneide ausführbar sind.

Die Aufgabe wird auch durch ein Verfahren gemäß Anspruch 6 gelöst.

Die sich daraus ergebenden Vorteile wurden bereits im Zusammenhang mit der erfindungsgemäßen Vorrichtung beschrieben, weshalb zur Vermeidung von Wiederholungen auf die entsprechenden Passagen verwiesen wird.

Gemäß der Erfindung werden die Fischfilets vor dem Auftreffen auf die Hauptschneide mittels einer Nebenschneide angeschnitten, wobei das Anschneiden, nämlich die Länge bzw. Tiefe des Anschnittes durch die Nebenschneide in Abhängigkeit der zuvor ermittelten Fischfiletgröße automatisch eingestellt wird.

In einer bevorzugten Weiterbildung des Verfahrens steuert eine Auswerte- und Steuereinheit die Größe des Schneidspaltes S und die Position der Nebenschneide relativ zur Hauptschneide in Abhängigkeit der zuvor ermittelten Fischfiletgröße und der Transportgeschwindigkeit der Fischfilets.

Vorteilhafterweise wird der Abstand des Andrückelementes zur Mitnehmerwalze in Abhängigkeit der zuvor ermittelten Fischfiletgröße automatisch angepasst. Dadurch wird die Belastung auf das Fischfilet auf das notwendige Minimum reduziert.

Das erfindungsgemäße Verfahren wird besonders bevorzugt dadurch weitergebildet, dass die einzelnen Stellbewegungen zur Veränderung der Größe des Schneidspaltes S und/oder zur Relativbewegung der Nebenschneide gegenüber der Hauptschneide und/oder zur Veränderung des Abstandes zwischen dem Andrückelement und der Mitnehmerwalze unabhängig voneinander ausgeführt werden können.

Die weiteren sich aus den zuvor beschriebenen Verfahrensschritten, die das erfindungsgemäße Verfahren weiterbilden, ergebenden Vorteile wurden ebenfalls im Zusammenhang mit der Vorrichtung beschrieben, weshalb auf die korrespondierenden Textstellen verwiesen wird.

Ganz besonders eignet sich die erfindungsgemäße Vorrichtung nach einem der Ansprüche 1 bis 6 zum Ausführen bzw. Durchführen des Verfahrens. Weitere zweckmäßige und/oder vorteilhafte Merkmale und Weiterbildungen sowie Verfahrensschritte der Erfindung ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine schematische Darstellung der erfindungsgemäßen Vorrichtung mit einer ersten Stellung der Hauptschneide (kleiner Spalt) und einer Nebenschneide in vorgezogener Anschnittposition,
- Fig. 2: den vergrößerten Bereich II der Trennanordnung der Vorrichtung gemäß Figur 1,

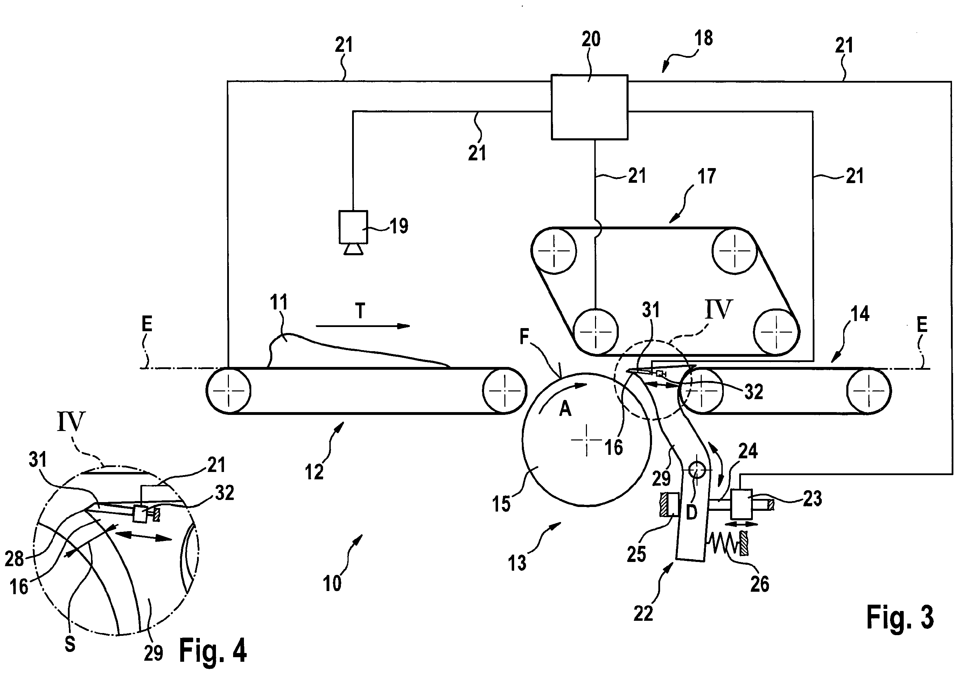

- Fig. 3: eine schematische Darstellung der erfindungsgemäßen Vorrichtung mit einer zweiten Stellung der Hauptschneide (großer Spalt) und einer Nebenschneide in zurückgezogener Warteposition,
- Fig. 4: den vergrößerten Bereich IV der Trennanordnung der Vorrichtung gemäß Figur 3,
- Fig. 5: eine vergrößerte Darstellung des Schwenkmechanismus mit Haupt- und Nebenschneide, und

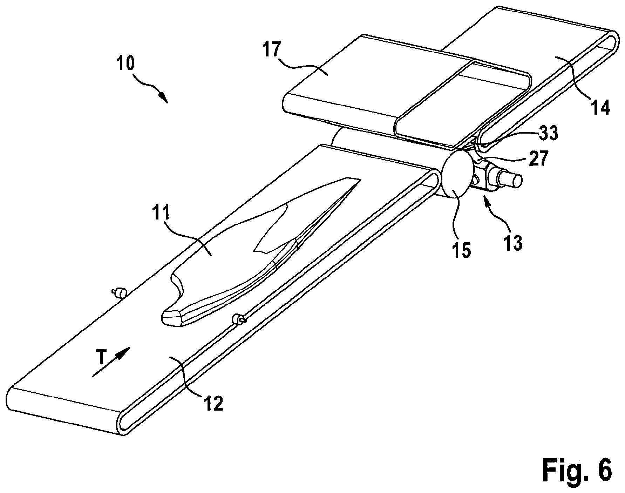

- Fig. 6: eine vereinfachte Darstellung der Vorrichtung in perspektivischer Ansicht.

Die in der Zeichnung dargestellte Vorrichtung dient zum Enthäuten von Fischfilets. Allerdings lassen sich auch andere Oberflächenschichten, wie z.B. eine Fettschicht oder dergleichen, mit der erfindungsgemäßen Vorrichtung bzw. dem Verfahren von Fischfilets oder vergleichbaren Produkten abtrennen.

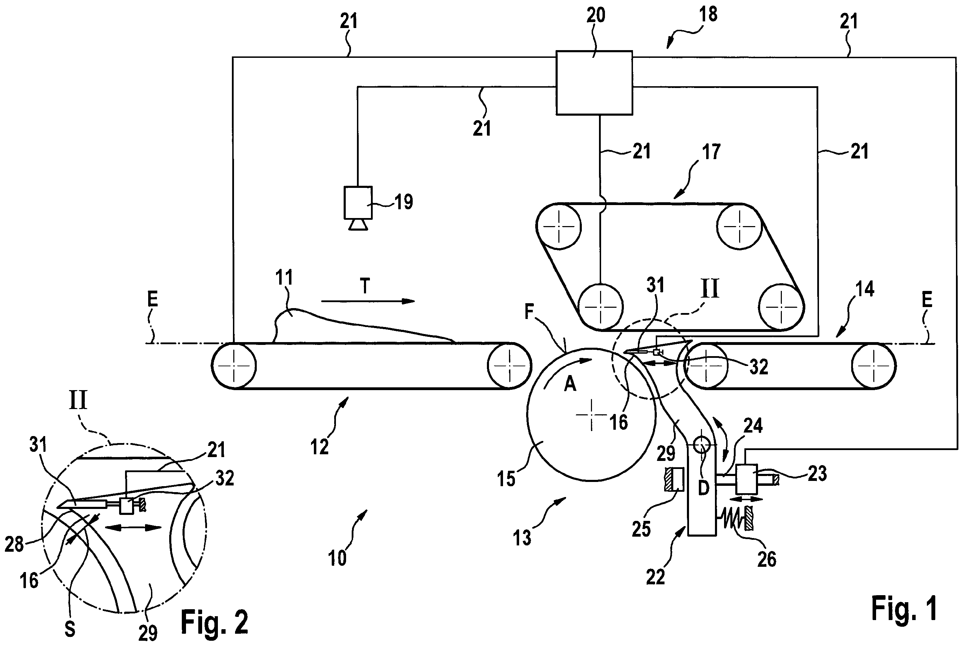

In der Figur 1 ist schematisch eine Vorrichtung 10 zum Abtrennen einer die Haut einschließenden Oberflächenschicht von Fischfilets 11 dargestellt. Die Vorrichtung 10 umfasst eine Zuführeinrichtung 12 zum Zuführen der auf ihrer Haut liegenden Fischfilets 11 Schwanzende voraus in Transportrichtung T in den Bereich einer Trennanordnung 13, eine Abtransporteinrichtung 14 zum Abtransport der von der Oberflächenschicht befreiten Fischfilets 11, sowie die Trennanordnung 13. Die Trennanordnung 13 umfasst eine in Transportrichtung T der Fischfilets 11 hinter der Zuführeinrichtung 12 und vor der Abtransporteinrichtung 14 angeordnete und umlaufend angetriebene Mitnehmerwalze 15 mit einer der Transportrichtung T gleichlaufenden Antriebsrichtung A. Das bedeutet, dass die Mitnehmerwalze 15 durch nicht gezeigte Antriebsmittel in der Ansicht gemäß Figur 1 im Uhrzeigersinn angetrieben ist, so dass die Fischfilets 11 mittels der Mitnehmerwalze 15 in Transportrichtung T auf die Abtransporteinrichtung 14 zu weiter transportierbar sind. Des Weiteren umfasst die Trennanordnung 13 eine im Bereich der Mitnehmerwalze 15 angeordnete Hauptschneide 16 zum Abtrennen der Oberflächenschicht sowie ein im Bereich der Hauptschneide 16 wirksames Andrückelement 17 zum Andrücken der Fischfilets 11 an die strukturierte Förderfläche F der Mitnehmerwalze 15. Die Hauptschneide 16 ist zur Bildung eines Schneidspaltes S beabstandet zur Mitnehmerwalze 15 angeordnet und gegenüber der Mitnehmerwalze 15 ausweichbar ausgebildet.

Ferner weist die Vorrichtung 10 eine Messanordnung 18 auf, wobei die Messanordnung 18 mindestens ein Detektionselement 19, das im Bereich der Zuführeinrichtung 12 angeordnet und zum Ermitteln größenrelevanter Daten der Fischfilets 11 ausgebildet und eingerichtet ist, sowie eine Auswerte- und Steuereinheit 20 umfasst, wobei die Auswerte- und Steuereinheit 20 über Signalleitungen 21 mit dem oder jedem Detektionselement 19 sowie mit der Hauptschneide 16 zum automatischen Steuern der Größe des Schneidspaltes S zwischen der Hauptschneide 16 und der Mitnehmerwalze 15 in Abhängigkeit der zuvor ermittelten Fischfiletgröße verbunden ist.

Als größenrelevante Daten werden im erfindungsgemäßen Sinn alle Daten verstanden, die sich dazu eignen, eine Aussage bezüglich der Größe der Fischfilets zu treffen. Rein beispielhaft sind die Länge, die Dicke sowie die Topologie der Fischfilets genannt. Mit den (zuvor und im Folgenden genannten) Signalleitungen 21 sind alle üblichen signalübertragenden Möglichkeiten, wie z.B. Kabel, Lichtwellenleiter, Funksignale etc. beschrieben. Die Signalleitung 21 zwischen der Auswerte- und Steuereinheit 20 und der Hauptschneide 16 beschreibt, dass zwischen der Auswerte- und Steuereinheit 20 und der Hauptschneide 16 eine Wirkverbindung herstellbar ist, so dass die Auswerte-und Steuereinheit 20 in Abhängigkeit der zuvor ermittelten Fischfiletgröße direkten Einfluss auf die Hautschneide 16 bzw. deren Positionierung nehmen kann.

Die Mitnehmerwalze 15 ist vorzugsweise ein zylindrischer Körper, der sich mindestens über einen Teil der Breite, vorzugsweise jedoch über die gesamte Breite der beispielhaft als endlose Bandförderer ausgebildeten Zuführeinrichtung 12 und Abtransporteinrichtung 14 erstreckt. Die Mantelfläche und damit Förderfläche F der Mitnehmerwalze 15 ist strukturiert ausgebildet. Diese Struktur kann z.B. durch Nuten und vorzugsweise durch Zähne oder dergleichen gebildet sein. Die Zuführeinrichtung 12 und die Abtransporteinrichtung 14 liegen in der gezeigten Ausführungsform mit ihren Transportebenen E in einer gemeinsamen Ebene, jedoch innerhalb der Ebene in Transportrichtung T beabstandet zueinander. Sie können aber auch in unterschiedlichen Ebenen liegen. Die Mitnehmerwalze 15, die zwischen der Zuführeinrichtung 12 und der Abtransporteinrichtung 14 liegt, ist vorzugsweise ortsfest angeordnet und derart gelagert, dass der Scheitelpunkt der Mitnehmerwalze 15 etwa in der Transportebene E liegt. Optional kann die Position der Mitnehmerwalze 15 auch verstellbar ausgebildet sein. Das Andrückelement 17 kann rein beispielhaft ein federbelasteter Andrückschuh sein, der gegen eine Federkraft gegenüber der Mantelfläche der Mitnehmerwalze 15 (auch Enthäutewalze genannt) verdrängbar gelagert ist. Das Andrückelement 17 kann - wie in der gezeigten Ausführungsform - auch durch einen umlaufend angetriebenen Riemen oder dergleichen gebildet sein. Wie erwähnt, umfasst die Messanordnung 18 mindestens ein Detektionselement 19. Es können jedoch auch zwei oder mehr als zwei Detektionselemente 19 im Bereich der Zuführeinrichtung 12 angeordnet sein, um Daten zur Größe der Fischfilets 11 zu ermitteln. Das oder jedes Detektionselement 19 kann z.B. ein Sensor zur Längenmessung sein. In anderen Beispielen können Lichtschranken zur Erfassung der Fischfiletgröße vorgesehen sein. Optional kann jedes Fischfilet 11 auch über eine Kamera erfasst und gescannt werden. Die gesammelten Informationen und Daten können dann über die oder jede Signalleitung 21 der Auswerte- und Steuereinheit 20 übermittelt werden. Die Auswerte- und Steuereinheit 20 (im Folgenden auch CPU genannt) kann dann aus den ermittelten Daten die notwendigen Rückschlüsse zur Steuerung der Hauptschneide 16 ziehen und die Hauptschneide 16 über die Signalleitung 21 in die gewünschte Stellung bringen.

Gemäß der Erfindung ist die Hauptschneide 16 an einem Schwenkmechanismus 22 angeordnet, der um einen Schwenkpunkt D zur Veränderung der Größe des Schneidspaltes S schwenkbar ausgebildet ist, wobei dem Schwenkmechanismus 22 ein Stellantrieb 23 zum Ausführen der Schwenkbewegung, zwei Anschläge 24, 25 zur Begrenzung der Schwenkbewegung in beide Schwenkrichtungen sowie ein Rückhalteelement 26, dessen Rückhaltekraft entgegen der Betätigungsrichtung des Stellantriebs 23 wirkt, zugeordnet sind. Der Stellantrieb 23 ist über eine Signalleitung 21 mit der Auswerte- und Steuereinheit 20 verbunden. In der gezeigten Ausführungsform ist der Stellantrieb 23 z.B. ein Pneumatikzylinder, dessen Kolbenstange einen ersten Anschlag 24 für den Schwenkmechanismus 22 bildet. Durch das schrittweise oder stufenlose Betätigen des Stellantriebs 23 wird die Schwenkbewegung um den Schwenkpunkt D ausgelöst. Ein Federelement als Rückhaltelement 26 wirkt dem Stellantrieb 23 entgegen, so dass der Schwenkmechanismus 22 permanent gegen den Anschlag 24 gedrückt wird, wobei der Anschlag 24 eine Kollision des Schwenkmechanismus 22 mit der Mitnehmerwalze 15 verhindert. Auf der dem Federelement und dem Stellantrieb 23 gegenüberliegenden Seite des Schwenkmechanismus 22 ist der weitere Anschlag 25 angeordnet, der die Schwenkbewegung in der anderen Schwenkrichtung begrenzt, um eine Kollision des Schwenkmechanismus 22 mit der Abtransporteinrichtung 14 zu verhindern.

Die zuvor beschriebene Lösung stellt lediglich eine bevorzugte Ausführungsform dar. Optional kann die Hauptschneide 16 auch durch konstruktiv andere Schwenkmechanismen bezüglich seiner Position und der Schneidspalteinstellung verstellbar ausgebildet sein. Auch können anstelle des Pneumatikzylinders andere übliche Stellkomponenten und statt des Federelementes andere bekannte Rückhaltekomponenten sowie Anschlagkomponenten eingesetzt werden.

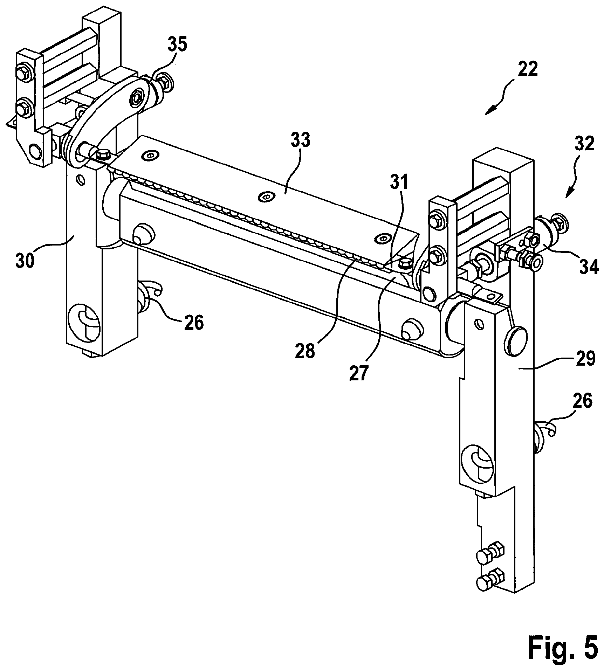

Der beispielhaft eingesetzte Schwenkmechanismus 22 selbst ist in der Figur 5 im Detail dargestellt. Der eine bauliche Einheit darstellende Schwenkmechanismus 22 umfasst einen Messerträger 27, der eine scharfe Messerkante 28 als Hauptschneide 16 aufweist. Die Messerkante 28 ist im gezeigten Ausführungsbeispiel einstückig mit dem Messerträger 27 ausgebildet, kann aber auch als separate Komponente vorgesehen sein. Die Messerkante 28 ist vorzugsweise mit einer Art Wellenschliff versehen. Andere übliche Messerkanten und Schliffarten sind aber ebenfalls möglich. Der Messerträger 27 ist zu beiden freien Enden fest mit Schwenkhebeln 29, 30 verbunden, so dass beim Auslösen der Schwenkbewegung durch den Stellantrieb 23 der Messerträger 27 mit der Messerkante 28 um den Schwenkpunkt D mit bewegt wird.

Wie zuvor beschrieben, ist die Hauptschneide 16 fest mit dem Schwenkmechanismus 22 verbunden und mit diesem um den Schwenkpunkt D schwenkbar. Der Hauptschneide 16 ist eine relativ zur Hauptschneide 16 bewegbare Nebenschneide 31 zum Anschneiden der Oberflächenschicht zugeordnet, wobei der Nebenschneide 31 ein Stellantrieb 32, der über eine Signalleitung 21 mit der Auswerte- und Steuereinheit 20 verbunden ist, zum Ausführen der Anschnittbewegung in Abhängigkeit der zuvor ermittelten Fischfiletgröße zugeordnet ist. Die Nebenschneide 31 dient dazu, beim Auftreffen des Fischfilets 11 in den Bereich der Trennanordnung, für die Hauptschneide 16 einen Vorbereitungsschnitt, den so genannten Anschnitt, auszuführen. Dazu ist die Nebenschneide 31 aus einer zurückgezogenen Warteposition, in der die Nebenschneide 31 in Transportrichtung T hinter der Hauptschneide 16 liegt (bzw. zumindest nicht entgegen der Transportrichtung T über die Hauptschneide 16 hinausragt), in eine Anschnittposition, in der die Nebenschneide 31 entgegen der Transportrichtung T über die Hauptschneide 16 hinausragt, und zurück bewegbar ausgebildet.

Erneut mit Bezug auf die Figur 5 kann die Nebenschneide 31 im Detail erläutert werden. Die Nebenschneide 31 ist in dem gezeigten Beispiel zwischen dem Messerträger 27 und einem Klemmelement 33 angeordnet, derart, dass eine lineare Stellbewegung der Nebenschneide 31 relativ zur Hauptschneide 16 gewährleistet ist. Zur verkantungsfreien Bewegung der Nebenschneide 31 umfasst der Stellantrieb 32 zwei Stellelemente 34, 35. Jedem der beiden Schwenkhebel 29, 30 ist ein Stellelement 34, 35 zur synchronen Betätigung der Nebenschneide 31 zugeordnet. Die Stellelemente 34, 35 können z.B. als Pneumatikzylinder ausgebildet sein. Selbstverständlich können die Nebenschneide 31 sowie der Stellantrieb 32 in einer anderen üblichen Weise ausgebildet sein. Über die Signalleitung 21 kann die Nebenschneide 31 gezielt und automatisch in Abhängigkeit der zuvor ermittelten Fischfiletgröße gesteuert werden.

Wie bereits beschrieben, ist der Zuführeinrichtung 12 ein Antriebsmittel zugeordnet, das über eine Signalleitung 21 mit der Auswerte- und Steuereinheit 20 zur Übermittlung der Transportgeschwindigkeit der Fischfilets 11 in Transportrichtung T in Verbindung steht. Optional kann dem Andrückelement 17 ebenfalls ein (nicht dargestellter) Stellantrieb zugeordnet sein, der über eine Signalleitung 21 mit der Auswerte- und Steuereinheit 20 verbunden ist. Der Stellantrieb dient insbesondere zur Einstellung des Abstandes zur Mitnehmerwalze 15 in Abhängigkeit der zuvor ermittelten Fischfiletgröße. Sämtliche Stellantriebe 23, 32 und/oder Antriebsmittel sind unabhängig voneinander mittels der Auswerte- und Steuereinheit 20 betätigbar und/oder steuerbar. Das bedeutet, dass die einzelnen Komponenten, z.B. die Hauptschneide 16 und die Nebenschneide 31, getrennt voneinander und insbesondere auch überlagert gesteuert und damit bewegt werden können.

Im Folgenden wird das erfindungsgemäße Verfahrensprinzip anhand der Zeichnung näher erläutert:
Die Fischfilets 11 werden auf ihrer Hautseite liegend und Schwanzende voraus in Transportrichtung T mittels einer Zuführeinrichtung 12 in den Bereich einer Trennanordnung 13 transportiert. Im Bereich der Trennanordnung 13 erfolgt das Trennen der Hautschicht vom eigentlichen Fischfilet 11, indem die Fischfilets 11 zwischen einer rotierend angetriebenen Mitnehmerwalze 15 und einem Andrückelement 17 liegend einer Hauptschneide 16 zugeführt werden. Mit anderen Worten drückt das Andrückelement 17 jedes Fischfilet 11 gegen die Förderfläche F der Mitnehmerwalze 15, die das Fischfilet 11 in Richtung der Hauptschneide 16 transportiert. Die Hauptschneide 16 taucht stirnseitig (am Schwanzende) in das Fischfilet 11 ein, wobei die Hauptschneide 16 durch den kontinuierlichen Transport der Fischfilets 11 in Transportrichtung T immer tiefer und etwa parallel zur Transportebene E in das Fischfilet 11 eindringt, bis der Trennschnitt abgeschlossen ist. Die abgetrennte Oberflächenschicht wird über einen zwischen der Hauptschneide 16 und der Mitnehmerwalze 15 gebildeten Schneidspalt S nach unten abgeführt, während das von der Oberflächenschicht befreite Fischfilet 11 an eine Abtransporteinrichtung 14 übergeben wird, die das von der Oberflächenschicht befreite Fischfilet 11 abtransportiert.

Erfindungsgemäß wird die Größe der zu bearbeitenden Fischfilets 11 im Bereich der Zuführeinrichtung 12 ermittelt und die Größe des Schneidspaltes S zwischen der Hauptschneide 16 und der Mitnehmerwalze 15 in Abhängigkeit der zuvor ermittelten Fischfiletgröße automatisch eingestellt. Mit anderen Worten wird vor jedem Trennvorgang das Produkt hinsichtlich seiner Größe erfasst. Diese Informationen und Daten werden dann zur individuellen und automatischen Steuerung der Hauptschneide 16 verwendet, um für jedes einzelne Fischfilet 11 den optimalen Schneidspalt S einzustellen.

Die Fischfilets 11 werden vor dem Auftreffen auf die Hauptschneide 16 mittels einer Nebenschneide 31 angeschnitten, wobei das Anschneiden, nämlich die Länge bzw. Tiefe des Anschnittes, durch die Nebenschneide 31 in Abhängigkeit der zuvor ermittelten Fischfiletgröße automatisch eingestellt wird. Wenn ein Fischfilet 11 in den Bereich der Mitnehmerwalze 15 transportiert wird, erfolgt neben der Einstellung der Größe des Schneidspaltes S in Abhängigkeit der Fischfiletgröße das Anschneiden, indem die Nebenschneide 31 in ihre Arbeitsposition gebracht wird. Dazu wird die Nebenschneide 31 entgegen der Transportrichtung T über die Hauptschneide 16 hervorstehend bewegt, so dass das Fischfilet 11 zunächst auf die Nebenschneide 31 trifft, die den Anschnitt ausführt. Sobald der Anschnitt erfolgt ist, kann die Nebenschneide 31 in ihre Warteposition zurückgezogen werden, so dass der eigentliche Trennvorgang von der Hauptschneide 16 ausgeführt wird. Wie lange die Nebenschneide 31 im Fischfilet 11 verbleibt, hängt u.a. von der Fischfiletgröße ab. Bei größeren Fischfilets 11 kann die Anschnittphase länger dauern als bei kleinen Fischfilets 11. Entsprechend wird die Nebenschneide 31 in Abhängigkeit der Fischfiletgröße gesteuert. Das Einstellen bzw. Steuern der Größe des Schneidspaltes S und die Position der Nebenschneide 31 relativ zur Hauptschneide 16 (Bewegung zwischen Warteposition und Arbeitsposition) wird durch eine Auswerte- und Steuereinheit 20 in Abhängigkeit der zuvor ermittelten Fischfiletgröße und der Transportgeschwindigkeit der Fischfilets 11 gesteuert.

Optional kann die Anpassung des Abstands zwischen dem Andrückelement 17 und der Mitnehmerwalze 15 ebenfalls automatisch erfolgen, vorzugsweise in Abhängigkeit der zuvor ermittelten Fischfiletgröße. Die einzelnen Stellbewegungen zur Veränderung der Größe des Schneidspaltes S und/oder zur Relativbewegung der Nebenschneide 31 gegenüber der Hauptschneide 16 und/oder zur Veränderung des Abstandes zwischen dem Andrückelement 17 und der Mitnehmerwalze 15 können unabhängig voneinander ausgeführt werden. Das bedeutet, dass die Hauptschneide 16 und die Nebenschneide 31 aufeinander abgestimmt oder völlig unabhängig voneinander in die jeweils optimale Position gebracht werden können. Entsprechendes gilt für die Veränderung des Abstandes zwischen dem Andrückelement 17 und der Mitnehmerwalze 15. Die Einstellbewegungen können insbesondere auch einander überlagert ausgeführt werden.

Besonders vorteilhaft ist es, wenn das zuvor beschriebene Verfahren mit der noch weiter oben beschriebenen Vorrichtung 10 ausgeführt wird.

## Patentansprüche

1. Vorrichtung (10) zum Abtrennen einer die Haut einschließenden Oberflächenschicht von Fischfilets (11), umfassend eine Zuführeinrichtung (12) zum Zuführen der auf ihrer Haut liegenden Fischfilets (11) Schwanzende voraus in Transportrichtung T in den Bereich einer Trennanordnung (13), eine Abtransporteinrichtung (14) zum Abtransport der von der Oberflächenschicht befreiten Fischfilets (11), sowie die Trennanordnung (13), wobei die Trennanordnung (13) eine in Transportrichtung T der Fischfilets (11) hinter der Zuführeinrichtung (12) und vor der Abtransporteinrichtung (14) angeordnete und umlaufend angetriebene Mitnehmerwalze (15) mit einer der Transportrichtung T gleichlaufenden Antriebsrichtung A, eine im Bereich der Mitnehmerwalze (15) angeordnete Hauptschneide (16) zum Abtrennen der Oberflächenschicht sowie ein im Bereich der Hauptschneide (16) wirksames Andrückelement (17) zum Andrücken der Fischfilets (11) an die strukturierte Förderfläche F der Mitnehmerwalze (15) umfasst, wobei die Hauptschneide (16) zur Bildung eines Schneidspaltes S beabstandet zur Mitnehmerwalze (15) angeordnet und gegenüber der Mitnehmerwalze (15) ausweichbar ausgebildet ist, **dadurch gekennzeichnet, dass** die Vorrichtung (10) eine Messanordnung (18) aufweist, wobei die Messanordnung (18) mindestens ein Detektionselement (19), das im Bereich der Zuführeinrichtung (12) angeordnet und zum Ermitteln größenrelevanter Daten der Fischfilets (11) ausgebildet und eingerichtet ist, sowie eine Auswerte- und Steuereinheit (20) umfasst, wobei die Auswerte- und Steuereinheit (20) über Signalleitungen (21) mit dem oder jedem Detektionselement (19) sowie mit der Hauptschneide (16) zum automatischen Steuern der Größe des Schneidspaltes S zwischen der Hauptschneide (16) und der Mitnehmerwalze (15) in Abhängigkeit der zuvor ermittelten Fischfiletgröße verbunden ist, wobei die Hauptschneide (16) fest mit einem Schwenkmechanismus (22) verbunden und mit diesem um den Schwenkpunkt D schwenkbar ist, und dass der Hauptschneide (16) eine relativ zur Hauptschneide (16) bewegbare Nebenschneide (31) zum Anschneiden der Oberflächenschicht zugeordnet ist, wobei der Nebenschneide (31) ein Stellantrieb (32), der über eine Signalleitung (21) mit der Auswerte- und Steuereinheit (20) verbunden ist, zum Ausführen der Anschnittbewegung in Abhängigkeit der zuvor ermittelten Fischfiletgröße zugeordnet ist.

2. Vorrichtung nach Anspruch 1, **dadurch gekennzeichnet, dass** die Hauptschneide (16) an dem Schwenkmechanismus (22) angeordnet ist, der um einen Schwenkpunkt D zur Veränderung der Größe des Schneidspaltes S schwenkbar ausgebildet ist, wobei dem Schwenkmechanismus (22) ein Stellantrieb (23) zum Ausführen der Schwenkbewegung, zwei Anschläge (24, 25) zur Begrenzung der Schwenkbewegung in beide Schwenkrichtungen sowie ein Rückhalteelement (26), dessen Rückhaltekraft entgegen der Betätigungsrichtung des Stellantriebs (23) wirkt, zugeordnet sind, und dass der Stellantrieb (23) über eine Signalleitung (21) mit der Auswerte- und Steuereinheit (20) verbunden ist.

3. Vorrichtung nach Anspruch 1 oder 2, **dadurch gekennzeichnet, dass** der Zuführeinrichtung (12) ein Antriebsmittel zugeordnet ist, das über eine Signalleitung (21) mit der Auswerte- und Steuereinheit (20) zur Übermittlung der Transportgeschwindigkeit der Fischfilets in Transportrichtung T in Verbindung steht.

4. Vorrichtung nach einem der Ansprüche 1 bis 3, **dadurch gekennzeichnet, dass** dem Andrückelement (17) ein Stellantrieb, der über eine Signalleitung (21) mit der Auswerte- und Steuereinheit (20) verbunden ist, zur Einstellung des Abstandes zur Mitnehmerwalze in Abhängigkeit der zuvor ermittelten Fischfiletgröße zugeordnet ist.

5. Vorrichtung nach einem der vorhergehenden Ansprüche 2 bis 4, **dadurch gekennzeichnet, dass** die Stellantriebe (23, 32) unabhängig voneinander mittels der Auswerte- und Steuereinheit (20) betätigbar und/oder steuerbar sind.

6. Verfahren zum Abtrennen einer die Haut einschließenden Oberflächenschicht von Fischfilets (11), umfassend die Schritte:
- Zuführen der auf ihrer Haut liegenden Fischfilets (11) Schwanzende voraus in Transportrichtung T mittels einer Zuführeinrichtung (12) in den Bereich einer Trennanordnung (13),
- Trennen der Oberflächenschicht der Fischfilets (11) von demselben mittels der Trennanordnung (13), indem die Fischfilets (11) zwischen einer rotierend angetriebenen Mitnehmerwalze (15) und einem Andrückelement (17) liegend einer Hauptschneide (16) zugeführt werden, wobei die abgetrennte Oberflächenschicht über einen zwischen der Hauptschneide (16) und der Mitnehmerwalze (15) gebildeten Schneidspalt S nach unten abgeführt wird, während das von der Oberflächenschicht befreite Fischfilet (11) an eine Abtransporteinrichtung (14) übergeben wird, und
- Abtransportieren der von der Oberflächenschicht befreiten Fischfilets (11) mittels der Abtransporteinrichtung (14),
**dadurch gekennzeichnet, dass** die Größe der zu bearbeitenden Fischfilets (11) im Bereich der Zuführeinrichtung (12) ermittelt und die Größe des Schneidspaltes S zwischen der Hauptschneide (16) und der Mitnehmerwalze (15) in Abhängigkeit der zuvor ermittelten Fischfiletgröße automatisch eingestellt wird, wobei die Fischfilets (11) vor dem Auftreffen auf die Hauptschneide (16) mittels einer Nebenschneide (31) angeschnitten werden, wobei das Anschneiden, nämlich die Länge bzw. Tiefe des Anschnittes, durch die Nebenschneide (31) in Abhängigkeit der zuvor ermittelten Fischfiletgröße automatisch eingestellt wird.

7. Verfahren nach Anspruch 6, **dadurch gekennzeichnet, dass** eine Auswerte-und Steuereinheit (20) die Größe des Schneidspaltes S und die Position der Nebenschneide (31) relativ zur Hauptschneide (16) in Abhängigkeit der zuvor ermittelten Fischfiletgröße und der Transportgeschwindigkeit der Fischfilets (11) steuert.

8. Verfahren nach Anspruch 6 oder 7, **dadurch gekennzeichnet, dass** der Abstand des Andrückelementes (17) zur Mitnehmerwalze (15) in Abhängigkeit der zuvor ermittelten Fischfiletgröße automatisch angepasst wird.

9. Verfahren nach einem der Ansprüche 6 bis 8, **dadurch gekennzeichnet, dass** die einzelnen Stellbewegungen zur Veränderung der Größe des Schneidspaltes S und/oder zur Relativbewegung der Nebenschneide (31) gegenüber der Hauptschneide (16) und/oder zur Veränderung des Abstandes zwischen dem Andrückelement (17) und der Mitnehmerwalze (15) unabhängig voneinander ausgeführt werden können.

10. Verfahren nach einem der Ansprüche 6 bis 9, **dadurch gekennzeichnet, dass** es mit einer Vorrichtung (10) nach einem der Ansprüche 1 bis 5 ausgeführt wird.

## Claims

1. Apparatus (10) for removing a surface layer including the skin from fish fillets (11), comprising a feeding device (12) for feeding the fish fillets (11) lying skin side down tail end first in transport direction T in the region of a separating arrangement (13), a dispatching device (14) for dispatching the fish fillets (11) freed from the surface layer, and the separating arrangement (13), wherein the separating arrangement (13) comprises a rotationally driven driver roller (15) arranged downstream of the feeding device (12) and upstream of the dispatching device (14) in the transport direction T of the fish fillets (11), said driver roller having a drive direction A synchronous with the transport direction T, a main blade (16) arranged in the region of the driver roller (15) for removing the surface layer and a pressing element (17) active in the region of the main blade (16) for pressing the fish fillets (11) onto the textured conveying surface F of the driver roller (15), wherein the main blade (16) is arranged at a distance from the driver roller (15) to form a cutting gap S and is designed to be deflectable relative to the driver roller (15), **characterized in that** the apparatus (10) has a measuring arrangement (18), said measuring arrangement (18) comprising at least one detection element (19), which is arranged in the region of the feeding device (12) and is designed and configured to determine size-relevant data of the fish fillets (11), and an evaluation and control unit (20), the evaluation and control unit (20) being connected by means of signal lines (21) to the or to each detection element (19) and to the main blade (16) for automatically controlling the size of the cutting gap S between the main blade (16) and the driver roller (15) depending on the previously determined fish fillet size, wherein the main blade (16) is firmly connected to the pivot mechanism (22) and is pivotable therewith about the pivot point D, and **in that** a secondary blade (31), which is movable relative to the main blade (16), is assigned to the main blade (16) for incising the surface layer, wherein an adjusting drive (32), which is connected to the evaluation and control unit (20) by means of a signal line (21), is assigned to the secondary blade (31) for executing the incision movement depending on the previously determined fish fillet size.

2. Apparatus according to claim 1, **characterized in that** the main blade (16) is arranged on the pivot mechanism (22) which is designed to be pivotable about a pivot point D for changing the size of the cutting gap S, wherein an adjusting drive (23) for executing the pivoting movement, two abutments (24, 25) for limiting the pivoting movement in both pivoting directions and a retaining element (26), whose retaining force acts counter to the activation direction of the adjusting drive (23), are assigned to the pivot mechanism (22), and **in that** the adjusting drive (23) is connected to the evaluation and control unit (20) by means of a signal line (21).

3. Apparatus according to claim 1 or 2, **characterized in that** a drive means is assigned to the feeding device (12), said drive means being connected to the evaluation and control unit (20) by means of a signal line (21) for transmitting the transport speed of the fish fillet in transport direction T.

4. Apparatus according to one of claims 1 to 3, **characterized in that** an adjusting drive, which is connected to the evaluation and control unit (20) by means of a signal line (21), is assigned to the pressing element (17) to adjust the distance to the driver roller depending on the previously determined fish fillet size.

5. Apparatus according to one of the preceding claims 2 to 4, **characterized in that** the adjusting drives (23, 32) can be activated and/or controlled independently of each other by means of the evaluation and control unit (20).

6. Method for removing a surface layer including the skin from fish fillets (11), comprising the steps:
- feeding of the fish fillets (11) lying skin side down, tail end first in transport direction T by means of a feeding device (12) in the region of a separating arrangement (13),
- removal of the surface layer of the fish fillets (11) from the same by means of the separating arrangement (13), in that the fish fillets (11) are fed lying flat between a rotationally driven driver roller (15) and a pressing element (17) to a main blade (16), wherein the removed surface layer is dispatched downwards by way of a cutting gap S formed between the main blade (16) and the driver roller (15) while the fish fillet (11) freed from the surface layer is transferred to a dispatching device (14), and
- dispatching of the fish fillets (11) freed from the surface layer by means of the dispatching device (14),
**characterized in that** the size of the fish fillets (11) to be processed is determined in the region of the feeding device (12) and the size of the cutting gap S between the main blade (16) and the driver roller (15) is automatically adjusted depending on the previously determined fish fillet size, wherein the fish fillets (11) are incised by means of a secondary blade (31) before striking the main blade (16), wherein the incising, that is the length or depth of the incision, is automatically adjusted by the secondary blade (31) depending on the previously determined fish fillet size.

7. Method according to claim 6, **characterized in that** an evaluation and control unit (20) controls the size of the cutting gap S and the position of the secondary blade (31) relative to the main blade (16) depending on the previously determined fish fillet size and the transport speed of the fish fillets (11).

8. Method according to claim 6 or 7, **characterized in that** the distance of the pressing element (17) from the driver roller (15) is automatically adjusted depending on the previously determined fish fillet size.

9. Method according to one of claims 6 to 8, **characterized in that** the individual adjusting movements for changing the size of the cutting gap S and/or for relative movement of the secondary blade (31) with respect to the main blade (16) and/or for changing the distance between the pressing element (17) and the driver roller (15) can be performed independently of each other.

10. Method according to one of claims 6 to 9, **characterized in that** said method is carried out with an apparatus (10) according to one of claims 1 to 5.

## Revendications

1. Dispositif (10) pour séparer une couche superficielle de filets de poisson (11) incluant la peau, comprenant un appareil d'amenée (12) pour amener les filets de poisson (11) reposant sur leur peau, extrémité de queue en avant dans la direction de transport T, dans la zone d'un agencement de séparation (13), un appareil d'évacuation (14) pour évacuer les filets de poisson (11) débarrassés de la couche superficielle, ainsi que l'agencement de séparation (13), l'agencement de séparation (13) comprenant un rouleau d'entraînement (15) agencé dans la direction de transport T des filets de poisson (11) derrière l'appareil d'amenée (12) et devant l'appareil d'évacuation (14) et entraîné en rotation avec une direction d'entraînement A identique à la direction de transport T, une lame principale (16) agencée dans la zone du rouleau d'entraînement (15) pour séparer la couche superficielle ainsi qu'un élément de pression (17) agissant dans la zone de la lame principale (16) pour presser les filets de poisson (11) contre la surface de transport structurée F du rouleau d'entraînement (15), la lame principale (16) étant agencée à distance du rouleau d'entraînement (15) pour former une fente de coupe S et étant configurée de manière à pouvoir être déplacée par rapport au rouleau d'entraînement (15), **caractérisé en ce que** le dispositif (10) présente un agencement de mesure (18), l'agencement de mesure (18) comprenant au moins un élément de détection (19) qui est agencé dans la zone de l'appareil d'amenée (12) et qui est configuré et adapté pour déterminer des données pertinentes pour la taille des filets de poisson (11), ainsi qu'une unité d'évaluation et de commande (20), l'unité d'évaluation et de commande (20) étant reliée par l'intermédiaire de lignes de signalisation (21) à l'élément de détection ou à chaque élément de détection (19) ainsi qu'à la lame principale (16) pour commander automatiquement la taille de la fente de coupe S entre la lame principale (16) et le rouleau d'entraînement (15) en fonction de la taille des filets de poisson déterminée auparavant, la lame principale (16) étant reliée de manière fixe à un mécanisme de pivotement (22) et pouvant pivoter avec celui-ci autour du point de pivotement D, et **en ce qu'**à la lame principale (16) est associée une lame secondaire (31) mobile par rapport à la lame principale (16) pour entailler la couche superficielle, un servomoteur (32), qui est relié par l'intermédiaire d'une ligne de signalisation (21) à l'unité d'évaluation et de commande (20), étant associé à la lame secondaire (31) pour réaliser le mouvement d'entaillage en fonction de la taille des filets de poisson déterminée auparavant.

2. Dispositif selon la revendication 1, **caractérisé en ce que** la lame principale (16) est agencée sur le mécanisme de pivotement (22), qui est configuré de manière à pouvoir pivoter autour d'un point de pivotement D pour modifier la taille de la fente de coupe S, au mécanisme de pivotement (22) étant associés un servomoteur (23) pour exécuter le mouvement de pivotement, deux butées (24, 25) pour limiter le mouvement de pivotement dans les deux directions de pivotement ainsi qu'un élément de retenue (26) dont la force de retenue agit à l'encontre de la direction d'actionnement du servomoteur (23), et **en ce que** le servomoteur (23) est relié à l'unité d'évaluation et de commande (20) par l'intermédiaire d'une ligne de signalisation (21).

3. Dispositif selon la revendication 1 ou 2, **caractérisé en ce qu'**à l'appareil d'amenée (12) est associé un moyen d'entraînement, qui est relié à l'unité d'évaluation et de commande (20) par l'intermédiaire d'une ligne de signalisation (21) pour transmettre la vitesse de transport des filets de poisson dans la direction de transport T.

4. Dispositif selon l'une quelconque des revendications 1 à 3, **caractérisé en ce qu'**un servomoteur, qui est relié à l'unité d'évaluation et de commande (20) par l'intermédiaire d'une ligne de signalisation (21), est associé à l'élément de pression (17) pour régler la distance par rapport au rouleau d'entraînement en fonction de la taille des filets de poisson déterminée auparavant.

5. Dispositif selon l'une quelconque des revendications 2 à 4 précédentes, **caractérisé en ce que** les servomoteurs (23, 32) peuvent être actionnés et/ou commandés indépendamment l'un de l'autre au moyen de l'unité d'évaluation et de commande (20).

6. Procédé de séparation d'une couche superficielle de filets de poisson (11) incluant la peau, comprenant les étapes suivantes :
- l'amenée des filets de poisson (11) reposant sur leur peau, extrémité de queue en avant dans la direction de transport T, au moyen d'un appareil d'amenée (12), dans la zone d'un agencement de séparation (13),
- la séparation de la couche superficielle des filets de poisson (11) de ceux-ci au moyen de l'agencement de séparation (13), en amenant les filets de poisson (11) à une lame principale (16) en les plaçant entre un rouleau d'entraînement (15) entraîné en rotation et un élément de pression (17), la couche superficielle séparée étant évacuée vers le bas par l'intermédiaire d'une fente de coupe S formée entre la lame principale (16) et le rouleau d'entraînement (15), tandis que le filet de poisson (11) débarrassé de la couche superficielle est transféré à un appareil d'évacuation (14), et
- l'évacuation des filets de poisson (11) débarrassés de la couche superficielle au moyen de l'appareil d'évacuation (14),
**caractérisé en ce que** la taille des filets de poisson (11) à traiter est déterminée dans la zone de l'appareil d'amenée (12) et la taille de la fente de coupe S entre la lame principale (16) et le rouleau d'entraînement (15) est réglée automatiquement en fonction de la taille des filets de poisson déterminée auparavant, les filets de poisson (11) étant entaillés avant d'arriver sur la lame principale (16) au moyen d'une lame secondaire (31), l'entaille, à savoir la longueur ou la profondeur de l'entaille, par la lame secondaire (31) étant réglée automatiquement en fonction de la taille des filets de poisson déterminée auparavant.

7. Procédé selon la revendication 6, **caractérisé en ce qu'**une unité d'évaluation et de commande (20) commande la taille de la fente de coupe S et la position de la lame secondaire (31) par rapport à la lame principale (16) en fonction de la taille des filets de poisson déterminée auparavant et de la vitesse de transport des filets de poisson (11).

8. Procédé selon la revendication 6 ou 7, **caractérisé en ce que** la distance de l'élément de pression (17) par rapport au rouleau d'entraînement (15) est ajustée automatiquement en fonction de la taille des filets de poisson déterminée auparavant.

9. Procédé selon l'une quelconque des revendications 6 à 8, **caractérisé en ce que** les mouvements de réglage individuels pour la modification de la taille de la fente de coupe S et/ou pour le mouvement relatif de la lame secondaire (31) par rapport à la lame principale (16) et/ou pour la modification de la distance entre l'élément de pression (17) et le rouleau d'entraînement (15) peuvent être réalisés indépendamment les uns des autres.

10. Procédé selon l'une quelconque des revendications 6 à 9, **caractérisé en ce qu'**il est réalisé avec un dispositif (10) selon l'une quelconque des revendications 1 à 5.
